# EUROPÄISCHE PATENTSCHRIFT

(11) **EP 4 101 574 B1**
(45) Veröffentlichungstag und Bekanntmachung des Hinweises auf die Patenterteilung: **03.07.2024**
(21) Anmeldenummer: 21178803.9
(22) Anmeldetag: 10.06.2021
(51) Int. Cl.: B23K 11/00, B23K 26/346, B23K 28/02

(54) **VORRICHTUNG ZUM ELEKTRISCHEN WIDERSTANDSAUFTRAGSSCHMELZEN, INSBESONDERE WIDERSTANDSSCHWEISSEN ODER WIDERSTANDSLÖTEN, VERFAHREN ZUM MITTELS JEWEILIGER LASERSTRAHLEN UNTERSTÜTZTEN AUFBRINGEN EINES ZUSATZWERKSTOFFES SOWIE VERWENDUNG EINER VORRICHTUNG**
DEVICE FOR ELECTRICAL RESISTANCE DEPOSITION, IN PARTICULAR RESISTANCE WELDING OR RESISTANCE SOLDERING, METHOD FOR APPLYING AN ADDITIONAL MATERIAL BY MEANS OF RESPECTIVE LASER BEAMS AND USE OF A DEVICE
DISPOSITIF D'APPLICATION DE FUSION PAR RÉSISTANCE ÉLECTRIQUE, EN PARTICULIER DE SOUDAGE PAR RÉSISTANCE OU DE BRASSAGE PAR RÉSISTANCE, PROCÉDÉ D'APPLICATION ASSISTÉE PAR FAISCEAU LASER RESPECTIF D'UNE MATIÈRE SUPPLÉMENTAIRE, AINSI QU'UTILISATION D'UN DISPOSITIF

(43) Veröffentlichungstag der Anmeldung: 14.12.2022
(73) Patentinhaber: Laser Zentrum Hannover e.V., 30419 Hannover (DE)
(72) Erfinder: Biester, Kai, 30167 Hannover (DE); Lammers, Marius, 31137 Hildesheim (DE); Budde, Laura, 30451 Hannover (DE); Barroi, Alexander, 30163 Hannover (DE)
(74) Vertreter: Weidner Stern Jeschke

(56) Entgegenhaltungen:
- EP-A1- 2 512 720
- JP-A- 2001 246 465
- US-A1- 2011 297 658
- US-A1- 2014 008 334
- US-A1- 2014 042 129
- US-A1- 2015 283 639
- US-A1- 2020 147 726

## Beschreibung

Die Erfindung betrifft eine Vorrichtung zum elektrischen Widerstandsauftragsschmelzen, insbesondere Widerstandsschweißen oder Widerstandslöten, eines Zusatzwerkstoffs auf eine Bearbeitungsfläche eines Grundwerkstoffs in einer Bearbeitungszone mit einer Zuführeinrichtung zum Zuführen des Zusatzwerkstoffes in die Bearbeitungszone entlang einer Bezugsachse und einer elektrischen Bestromungseinheit zum Erzeugen eines elektrischen Flusses zwischen dem Grundwerkstoff und dem Zusatzwerkstoff zum Aufschmelzen des Zusatzwerkstoffes und/oder des Grundwerkstoffes. Weiterhin betrifft die Erfindung ein Verfahren zum mittels jeweiliger Laserstrahlen unterstützten Aufbringen eines Zusatzwerkstoffes auf einen Grundwerkstoff mittels Widerstandsauftragsschmelzen, insbesondere mittels Widerstandsschweißen und/oder Widerstandslöten, mit einer Vorrichtung der genannten Art. Zudem betrifft die Erfindung die Verwendung einer Vorrichtung der genannten Art.

Vorrichtungen zum elektrischen Widerstandsauftragsschmelzen, insbesondere Widerstandsschweißen oder Widerstandslöten, sind grundsätzlich bekannt. Die US 2018/0318929 A1 betrifft eine sogenannte smarte additive Fertigungsvorrichtung. Bei dieser wird ein Zusatzwerkstoff mittels Laserstrahlung aufgeschmolzen und damit beispielsweise ein sogenanntes 3D-Drucken ermöglicht. Hierbei ist zum Aufschmelzen allerdings eine sehr hohe Laserenergie notwendig.

In der JP 5931948 B2 ist eine Düse sowie ein Gerät zur additiven Fertigung und ein entsprechendes Verfahren offenbart. Es handelt sich dabei um eine Vorrichtung zum Pulverschweißen, bei welcher eine Ausrichtung einer Zuführrichtung für das Pulver geändert werden kann.

Die US 2011/297658 offenbart ein Verfahren und System zum Schweißen oder Verbinden von Werkstücken unter Verwendung einer hochintensiven Energiequelle zur Erzeugung einer Schweißpfütze und mindestens eines Widerstandszusatzdrahts, der auf oder nahe seiner Schmelztemperatur erhitzt und in der Schweißpfütze abgelegt wird.

Bekannte Vorrichtungen zum Auftragsschmelzen weisen dabei den Nachteil auf, dass entweder ein richtungsabhängiges Unterstützen des elektrischen Schweißprozesses mittels eines Lasers vorliegt oder aber entsprechende Leistungen für das Aufschmelzen mittels eines Lasers aufgebracht werden müssen. Ein solcher Laser ist im zweitgenannten Fall deutlich teurer als beispielsweise eine elektrische Einrichtung zum Aufschmelzen eines Zusatzwerkstoffs.

Aufgabe der Erfindung ist es, den Stand der Technik zu verbessern.

Gelöst wird die Aufgabe durch eine Vorrichtung gemäß Anspruch 1.

Eine solche Vorrichtung ermöglicht es, mittels der unterschiedlichen Laseremitterpositionen und einem damit verschiedenartigen Einstrahlen von Laserenergie aus unterschiedlichen Richtungen ein richtungsunabhängiges Widerstandsauftragsschmelzen zu realisieren. Durch den ersten Laseremitter und/oder den zweiten Laseremitter und/oder den dritten Laseremitter kann dabei wahlweise oder aufeinander abgestimmt jeweils Laserenergie aus unterschiedlichen Laseremitterpositionen in die Bearbeitungszone eingestrahlt werden und damit je nach Bewegungsrichtung der Zuführeinrichtung über den Grundwerkstoff oder beispielsweise in einer Bearbeitungsrichtung in etwa parallel zum Grundwerkstoff ein insbesondere richtungsabhängiges Einwirken in die Bearbeitungszone zum richtungsabhängigen Unterstützen des Widerstandsauftragsschmelzens ermöglicht werden.

Folgende Begriffe seien an dieser Stelle erläutert:

Eine "Vorrichtung zum elektrischen Widerstandsauftragsschmelzen" kann jede Vorrichtung sein, bei welcher oder mittels welcher ein Zusatzwerkstoff durch elektrischen Strom, einen elektrischen Fluss oder Elektrizität aufgeschmolzen wird, insbesondere um diesen auf einen Grundwerkstoff aufzubringen oder mit einem Grundwerkstoff zu verbinden. Beispielsweise handelt es sich dabei um ein Widerstandsschweißen oder ein Widerstandslöten.

Ein "Widerstandsschweißen", welches auch als "Elektroschweißen" bekannt ist, bezeichnet einen Prozess, bei welchem der Zusatzwerkstoff gemeinsam mit dem Grundwerkstoff aufgeschmolzen wird, um eine stoffschlüssige Verbindung herzustellen. Dabei wird beispielsweise ein Auftragsschweißen eines Zusatzwerkstoffs auf einen Grundwerkstoff vorgenommen oder aber ein Verbindungsschweißen verschiedener Bestandteile eines Grundwerkstoffs. So können beispielsweise mittels eines Widerstandsschweißens zwei Stahlbleche miteinander verbunden werden.

Ein "Widerstandslöten" beschreibt einen Prozess, bei welchem ein Zusatzwerkstoff mittels elektrischen Stroms und des elektrischen Widerstandes des Zusatzwerkstoffes aufgeschmolzen wird und auf eine Bearbeitungsfläche eines Grundwerkstoffs aufgebracht wird. Im Unterschied zum Schweißen beschreibt ein Löten dabei einen Vorgang, bei welchem der Grundwerkstoff in der Regel nicht mit aufgeschmolzen wird und der Zusatzwerkstoff durch die Fusion an der Oberfläche des Grundwerkstoffes haftet, wenn der Zusatzwerkstoff erkaltet.

Ein "Zusatzwerkstoff" ist ein, beispielsweise metallischer, Werkstoff, welcher beim Schweißen oder Löten zusätzlich zum Grundwerkstoff, beispielsweise zusätzlich zu zwei oder mehreren zu verbindenden Bauteilen, in eine Schweißnaht oder eine Lötnaht eingebracht wird. Ein solcher Zusatzwerkstoff wird während des entsprechenden Prozesses aufgeschmolzen und bildet nach dem Erkalten gemeinsam mit dem Grundwerkstoff eine stoffschlüssige Verbindung. Beispielsweise ist ein Zusatzwerkstoff ein Metall mit einer zum Grundwerkstoff kompatiblen Legierung, der insbesondere in Form eines Schweißdrahtes vorliegt.

Ein "Grundwerkstoff" ist der Werkstoff, welcher mittels des Schweißens oder des Lötens direkt bearbeitet, beispielsweise beschichtet oder verbunden werden soll. So ist ein Grundwerkstoff beispielsweise eine Metallplatte, auf welche mittels eines Auftragsschweißens ein Zusatzwerkstoff aufgebracht werden soll. Ein Grundwerkstoff kann auch eine Menge von Bauteilen bilden, welche mittels eines Schweißens und/oder eines Lötens verbunden werden sollen.

Eine "Bearbeitungsoberfläche" ist dabei eine dem Zusatzwerkstoff zugewandte Oberfläche des Grundwerkstoffes, auf welche der Zusatzwerkstoff aufgeschmolzen wird. Eine "Bearbeitungszone" ist beispielsweise eine sogenannte Wärmeeinflusszone oder Teil einer Wärmeeinflusszone während eines elektrischen Widerstandsauftragsschmelzens, welche beispielsweise durch ein Vielfaches des Radius eines sogenannten Schmelzbades auf dem Grundwerkstoff definiert wird. Die Bearbeitungszone ist beispielsweise dabei etwa so groß, dass diese von einem zweifachen, dreifachen oder beispielsweise vierfachen Radius eines Schmelzbades definiert ist.

Eine "Zuführeinrichtung" zum Zuführen des Zusatzwerkstoffes in die Bearbeitungszone ist beispielsweise eine Förderspitze eines Schweißgerätes, durch welche ein Schweißdraht als Zusatzwerkstoff eingebracht wird. Ebenso kann diese Zuführeinrichtung auch einen Drahtvorschubapparat, einen Rollenförderer für einen Schweißdraht oder ein gleichwirkendes System aufweisen. Beispielsweise kann diese Zuführeinrichtung auch eine andere Einrichtung sein, welche beispielsweise einen Schweißdraht oder Lötdraht in die Bearbeitungszone führt und/oder fördert und dabei beispielsweise auch elektrisch einkoppelt, sodass ein elektrischer Fluss zwischen dem Grundwerkstoff und der Vorrichtung zum elektrischen Widerstandsauftragsschweißen geschlossen werden kann.

Eine "Bezugsachse" ist beispielsweise die Hauptachse der Vorrichtung, welche insbesondere durch eine Zuführachse des Zusatzwerkstoffs definiert ist. Beispielsweise kann eine solche Bezugsachse als geometrische Grundlage dazu dienen, die Vorrichtung robotisch zu bewegen und damit einen Bezug für beispielsweise das Programmieren einer CNC-gesteuerten Kinematik vorzunehmen. Insbesondere ist diese Bezugsachse dabei nicht mathematisch exakt eine beispielsweise Längsachse des Zusatzwerkstoffs, sondern kann im technisch üblichen Rahmen von dieser abweichen. Alternativ dazu kann die Bezugsachse auch schräg oder in einem definierten Winkel zum Zusatzwerkstoff definiert sein, wenn beispielsweise der Zusatzwerkstoff schräg zur Bezugsachse in die Bearbeitungszone eingeführt wird.

Eine "elektrische Bestromungseinheit" ist beispielsweise ein Transformator oder eine elektrische Baugruppe, welche dazu geeignet ist, einen elektrischen Strom zwischen dem Grundwerkstoff und beispielsweise der Zuführeinrichtung fließen zu lassen. Dabei stellt eine solche elektrische Bestromungseinheit ausreichend elektrische Energie, beispielsweise eine ausreichende Stromstärke, zur Verfügung, sodass beispielsweise ein zwischen dem Zusatzwerkstoff und dem Grundwerkstoff entstehender Lichtbogen gespeist werden kann. Alternativ dazu kann die elektrische Bestromungseinheit auch dazu dienen, einen elektrischen Kurzschluss zwischen Zusatzwerkstoff und Grundwerkstoff dazu zu nutzen, den Zusatzwerkstoff aufzuschmelzen. Insbesondere ist die elektrische Bestromungseinheit dabei auch dazu eingerichtet, den elektrischen Strom in Impulsen, an- und abschwellende Stromstärken oder anderen zweckdienlichen Bestromungsvarianten, bereitzustellen, wie diese für Schweißgeräte oder auch Lötvorrichtungen zweckdienlich sind.

Ein "elektrischer Fluss" beschreibt einen Stromfluss zwischen dem Grundwerkstoff und dem Zusatzwerkstoff, welcher beispielsweise durch eine Spannung der elektrischen Bestromungseinheit zwischen Zuführeinrichtung und Grundwerkstoff initiiert wird und welcher dann den Stromfluss, beispielsweise gemessen in Ampere, beschreibt.

Ein "Aufschmelzen" des Zusatzwerkstoffs und/oder des Grundwerkstoffs beschreibt einen Phasenübergang des jeweiligen Werkstoffs von einem festen Zustand in einen flüssigen Zustand. Beispielsweise wird mit diesem Prozess ein Schweißdraht und der Grundwerkstoff aus einem Stahlwerkstoff aufgeschmolzen. Ebenso kann ein Lot, beispielsweise ein Lotdraht, mittels eines elektrischen Widerstandes zwischen dem Grundwerkstoff und dem Lotdraht als Zusatzwerkstoff dann zum Aufschmelzen des Lotes dienen.

Ein "Laseremitter" ist eine Einrichtung zum Ausstrahlen von Laserlicht. Beispielsweise ist ein solcher Laseremitter eine Laserdiode, ein Lichtwellenleiter mit einem Endbereich, aus welchem Laserstrahlung austritt, oder eine andere Einrichtung zum Erzeugen, Weiterleiten und/oder Emittieren von Laserstrahlung.

Eine "Laseremitterposition" ist ein Ort oder eine Position des Laseremitters, insbesondere in Bezug zur Zuführeinrichtung und/oder im Bezug zum Zusatzwerkstoff und/oder der Bezugsachse, von welchem aus der Laseremitter in die Bearbeitungszone und/oder auf die Bearbeitungsoberfläche einstrahlt. Beispielsweise ist eine solche Laseremitterposition eine Montageposition eines entsprechenden Laseremitters innerhalb einer Grundstruktur der Vorrichtung zum elektrischen Widerstandsauftragsschmelzen.

Ein "Laserstrahl" beschreibt die geometrische Längsausdehnung und/oder radiale Ausdehnung eines sogenannten Lasers, also eines insbesondere parallelen, kohärenten Lichtstrahls. Ein solcher Laserstrahl kann dabei aus Lichtwellen gleicher, ähnlicher oder unterschiedlicher Wellenlängen oder auch aus Licht mit mehreren unterschiedlichen Wellenlängenbändern bestehen.

Ein "Einstrahlen von Laserenergie" beschreibt den Vorgang des Lenkens des Laserstrahls in einen bestimmten Bereich, beispielsweise in die Bearbeitungszone. Dabei wird mittels des Laserstrahls entsprechende Laserenergie übertragen und damit beispielsweise ein Bereich der Bearbeitungszone und/oder auch der Zusatzwerkstoff beispielsweise erwärmt.

Ein "bearbeitungsabhängiges Einwirken" beschreibt dabei ein Einstrahlen von Laserenergie in die Bearbeitungszone und/oder auf die Bearbeitungsoberfläche beispielsweise des Grundwerkstoffs oder auch auf den Zusatzwerkstoff derart, dass abhängig von einer Bearbeitungsrichtung, insbesondere einer Schweißrichtung, ein vorlaufendes, mitlaufendes oder auch nachlaufendes Einwirken des Laserstrahls in die Bearbeitungszone erfolgt. Ein bearbeitungsabhängiges Einwirken kann dabei auch abhängig vom eingesetzten Schweißverfahren oder anderen Parameter des Schweißprozesses erfolgen. So kann dieses bearbeitungsabhängige Einwirken beispielsweise in Abhängigkeit von Vorschubgeschwindigkeit eines Schweißkopfes, der eingebrachten Energie, einem Abstand eines Schweißkopfes von der Bearbeitungsoberfläche oder ähnlichen Parametern erfolgen.

Ein "bearbeitungsabhängiges Unterstützen" des Widerstandsauftragsschmelzens beschreibt dabei beispielsweise den Vorgang, dass mittels eines bearbeitungsabhängigen Einwirkens in die Bearbeitungszone ein vorlaufendes Reinigen der Bearbeitungsoberfläche, ein Vorwärmen des Grundwerkstoffes oder auch ein Nachbearbeiten einer erzeugten Schweißnaht oder auch Lötnaht erfolgt. "Bearbeitungsabhängig" beschreibt dabei, dass das Unterstützen beispielsweise abhängig von einer Bearbeitungsrichtung, einer Bearbeitungsgeschwindigkeit oder eines Bearbeitungsverlaufes erfolgt.

Um das bearbeitungsabhängige Unterstützen vielfältiger, flexibler und wirksamer durchzuführen, weist die Vorrichtung einen vierten Laseremitter und/oder weitere Laseremitter an einer vierten Laseremitterposition und/oder an einer weiteren Laseremitterposition derart auf die Bearbeitungszone ausgerichtet auf, dass mittels eines vierten Laserstrahls aus dem vierten Laseremitter und/oder mittels eines weiteren Laserstrahls aus dem weiteren Laseremitter ein Einstrahlen von Laserenergie aus unterschiedlichen Laserpositionen ermöglicht ist.

Mittels einer solchen Anordnung aus beispielsweise vier, fünf oder auch sechs oder mehr als sechs Laseremittern kann dabei ein sehr flexibles und exakt abgestimmtes bearbeitungsabhängiges Einwirken mittels jeweiliger Laserstahlen in die Bearbeitungszone erreicht werden. Damit ist auch ein besonders flexibles bearbeitungsabhängiges Unterstützen des Widerstandsauftragsschmelzens gemäß den oben genannten Beispielen möglich.

In einer Ausführungsform weist der erste Laseremitter, der zweite Laseremitter, der dritte Laseremitter, der vierte Laseremitter und/oder der weitere Laseremitter einen Diodenlaser, einen Festkörperlaser und/oder einen Gaslaser, beispielsweise einen CO-Laser oder einen CO₂-Laser auf.

Mittels der genannten verschiedenartigen Laser kann in einem kompakten Bereich einfach Laserstrahlung erzeugt werden. Insbesondere ist dabei eine jeweilige Optik und/oder auch eine Faseroptik vorgesehen, mittels welcher Laserstrahlung geleitet oder geformt wird. Somit kann der jeweilige Laseremitter oder auch der jeweilige Laser außerhalb der eigentlichen Vorrichtung vorgehalten und betrieben werden und die Laserstrahlen werden mittels der Optik und/oder auch der Faseroptik zum Leiten von Laserstrahlung beispielsweise in Richtung der Bearbeitungszone geleitet.

Eine "Optik" beschreibt dabei jede Anordnung von optisch leitenden Bauteilen, beispielsweise Linsen, Prismen oder auch anderen Elementen, welche dazu geeignet sind, das Laserlicht, insbesondere den Laserstrahl zu leiten, zu führen, zu fokussieren oder anderweitig optisch aufzubereiten.

Eine "Faseroptik" beschreibt dabei eine solche Optik, welche beispielsweise Lichtwellenleiter, insbesondere Glasfasern, aufweist. Insbesondere mittels einer solchen Faseroptik kann der jeweilige Laserstrahl dabei sehr flexibel vom jeweiligen Laserlicht erzeugenden Laser in die Bearbeitungszone gelenkt werden. Solche Faseroptiken sind dabei beispielsweise auch geometrisch frei an einer Vorrichtung verlegbar.

Um ein bearbeitungsabhängiges Unterstützen des Widerstandsauftragsschmelzens flexibel zu ermöglichen, ist oder sind der erste Laseremitter, der zweite Laseremitter, der dritte Laseremitter, der vierte Laseremitter und/oder der weitere Laseremitter derart angeordnet, dass eine erste Laserachse des ersten Laserstrahls, eine zweite Laserachse des zweiten Laserstrahls, eine dritte Laserachse des dritten Laserstrahls, eine vierte Laserachse des vierten Laserstrahls und/oder eine weitere Laserachse des weiteren Laserstrahls in einem Winkel von 15° bis 45°, zur Bearbeitungsoberfläche angeordnet ist oder sind.

Eine "Laserachse" eines jeweiligen Laserstrahls beschreibt dabei die nach dem Austritt des Laserstrahls aus dem Laseremitter zu beschreibende Längsachse des kohärenten Laserstrahls. Diese Laserachse muss dabei nicht mathematisch exakt definiert sein, sondern kann beispielsweise im technischen Rahmen um beispielsweise 1° oder 2° abweichen.

Ein "Winkel" bezieht sich dabei auf einen Vollwinkel von 360°.

In einer weiteren Ausführungsform ist oder sind der erste Laseremitter, der zweite Laseremitter, der dritte Laseremitter, der vierte Laseremitter und/oder der weitere Laseremitter derart angeordnet, dass eine erste Laserachse des ersten Laserstrahls, eine zweite Laserachse des zweiten Laserstrahls, eine dritte Laserachse des dritten Laserstrahls, eine vierte Laserachse des vierten Laserstrahls und/oder eine weitere Laserachse des weiteren Laserstrahls auf die Bearbeitungsoberfläche der Bearbeitungszone in einem gemeinsamen Bearbeitungspunkt, in eine im Wesentlichen ringförmigen Anordnung von Bearbeitungspunkten oder in mehreren ringförmigen Anordnungen von Bearbeitungspunkten auftrifft oder auftreffen.

Mittels dieser Anordnung kann beispielsweise ein Fokussieren mehrerer Laserstrahlen auf einen gemeinsamen Bearbeitungspunkt erfolgen, sodass eine hohe Energiedichte erzeugt wird. Weiterhin kann durch beispielsweise eine im Wesentlichen ringförmige Anordnung oder mehrere ringförmige Anordnungen von Bearbeitungspunkten eine entsprechende Abgrenzung von Bearbeitungszonen erfolgen, wobei mittels beispielsweise einer äußeren ringförmigen Anordnung ein Reinigen der Bearbeitungsoberfläche erfolgt, mittels einer inneren ringförmigen Anordnung von Bearbeitungspunkten ein Vorwärmen eines beispielsweise Nahtbereiches einer Schweißnaht oder auch einer Lötnaht und mittels jeweiliger auf den Bearbeitungspunkt gerichteter Laserachsen der Laserstrahlen ein Unterstützen des eigentlichen Widerstandsaufschmelzprozesses.

Ein "Bearbeitungspunkt" ist dabei eine im Vergleich zur Bearbeitungszone kleine geometrische Ausdehnung, welche im Vergleich punktförmig erscheint. Dabei ist ein solcher Bearbeitungspunkt keinesfalls ausschließlich ein mathematisch exakter Punkt, sondern umfasst technisch notwendige Abweichungen davon. Beispielsweise ist ein solcher Bearbeitungspunkt dabei so ausgebildet, dass dieser einen Durchmesser von 0,5 mm, 1 mm oder auch 2 mm aufweist. Ein solcher Bearbeitungspunkt kann dabei beispielsweise auch innerhalb einer späteren Nahtausprägung einen Durchmesser in einem Bereich zwischen 1mm und 10mm aufweisen.

Eine "im Wesentlichen ringförmige Anordnung" beschreibt eine Anordnung von Bearbeitungspunkten entlang einer Kreisform oder auch entlang einer ovalen Form, beispielsweise entlang der Umfangslinie einer Ellipse. "Im Wesentlichen" beschreibt dabei eine Abweichung von einem idealen Kreis bis zu beispielsweise eines Halbachsenverhältnisses einer Ellipse von 1:3 oder auch 1:4 und schließt ausdrücklich technisch bedingte Abweichungen mit ein.

Eine Anordnung von "mehreren ringförmigen Anordnungen" von Bearbeitungspunkten beschreibt dabei eine beispielsweise konzentrische oder ineinander überlagerte Anordnung von ringförmigen Anordnungen.

Um mittels der erfindungsgemäßen Vorrichtung einen Schweißprozess oder auch einen Lötprozess besonders zuverlässig durchführen zu können, ist eine in die Bearbeitungszone eingebrachte jeweilige Laserleistung eines jeweiligen Laseremitters einstellbar und/oder regelbar, wobei insbesondere jeweilige Laseremitter in unterschiedlichen Laserleistungen zueinander einstellbar sind.

Eine "Laserleistung" beschreibt dabei die mittels der jeweiligen Laseremitter ausgebrachte Leistung des Laserlichts, welche beispielsweise in Watt oder auch Kilowatt angegeben werden kann.

"Einstellbar" oder "regelbar" beschreibt dabei eine durch einen Bediener oder auch eine automatische Vorrichtung verstellbare Laserleistung. Im Falle einer Einstellbarkeit erfolgt dies im Rahmen eines Vorgabewertes, im Falle einer Regelbarkeit kann hier ein geschlossener Regelkreislauf vorgesehen sein. Häufig werden die Begriffe "einstellbar" und "regelbar" auch synonym verwendet.

Dabei kann bei einem jeweiligen Laseremitter ein Einstellen von unterschiedlichen Laserleistungen, also unterschiedlicher ausgebrachter Leistungen, erfolgen. Insgesamt ist damit ein sehr variables Zuführen von Laserleistung in die Bearbeitungszone möglich.

In einer weiteren Ausführungsform weist die Vorrichtung einen Sensor auf, wobei der Sensor insbesondere zum Betrachten der Bearbeitungszone angeordnet ist, sodass mittels des Sensors ein Prüfen und/oder ein Regeln der jeweiligen Laserleistung des jeweiligen Laseremitters erfolgt. Insbesondere ist der Sensor dabei eine Kamera, ein Pyrometer und/oder ein Interferenzsensor. Ebenso kann ein solcher Sensor auch als Einrichtung für eine optische Kohärenztomografie (OCT) ausgestaltet sein. Zudem kann ein Auswerten entsprechender Emmissionsspektren des Prozesses aus der Bearbeitungszone mittels Spektroskopie und/oder Fotodioden erfolgen.

Mittels eines solchen Sensors kann dabei beispielsweise die Qualität eines Lichtbogens zwischen dem Zusatzwerkstoff und dem Grundwerkstoff geprüft werden, weiterhin kann auch eine Temperaturverteilung oder ein Emittieren von UV-Strahlung aus einer entsprechenden Bearbeitungszone sensiert werden, wobei daraus dann ein Rückschluss auf die Qualität einer beispielsweise Schweißnaht oder Lötverbindung gezogen werden kann.

Ein "Sensor" ist beispielsweise eine elektronische Baugruppe oder ein elektronisches Bauteil, welches physikalische oder chemische Werte aufnehmen und in entsprechende elektrische Signale übersetzen kann.

Ein "Prüfen" und/oder ein "Regeln" beschreibt einen Prozess, bei welchem im Falle des Prüfens Parameter aus der Bearbeitungszone ausgelesen und einem Bediener zugänglich gemacht werden und im Falle des Regelns solche Parameter zum Nachsteuern oder auch aktiven Regeln eines entsprechenden Prozesses genutzt werden. Der Begriff "Regeln" wird dabei häufig synonym mit "Steuern" verwendet, wobei "Regeln" insbesondere einen geschlossenen Regelkreis beschreibt.

Eine "Kamera" ist ein Sensor, welcher beispielsweise eine Bildaufnahme in einem sichtbaren oder nicht sichtbaren Lichtbereich ermöglicht. Ein "Pyrometer" ist ein Sensor, welches Temperaturverteilungen mittels der Auswertung von Wärmestrahlung aufnehmen kann, indem die Wärmestrahlung als eine Temperatur interpretiert wird.

Um einen Schweißprozess oder auch einen Lötprozess oder den Prozess des Widerstandsauftragsschweißens zu stabilisieren und beispielsweise ein Oxidieren innerhalb der Bearbeitungszone zu vermeiden, weist die Zuführeinrichtung eine Einrichtung zum Einbringen eines Prozessgases, insbesondere eines Schutzgases, in die Bearbeitungszone auf.

Eine "Einrichtung zum Einbringen eines Prozessgases" beschreibt dabei beispielsweise eine Hülse, einen Schlauch oder auch eine einfache Düse, mittels welcher ein Prozessgas in die Bearbeitungszone eingebracht werden kann.

Ein "Prozessgas" kann dabei entweder ein Schutzgas oder auch ein sogenanntes Aktivgas sein, wobei ein solches Aktivgas dazu dient, chemische Bestandteile aus dem Aktivgas in die Bearbeitungszone während des Widerstandsauftragsschmelzens mit einzubringen und in den Grundwerkstoff und/oder den Zusatzwerkstoff einzubinden. Ein Beispiels für ein solches Aktivgas ist CO₂.

Ein "Schutzgas" wird dabei häufig auch zum Bezeichnen eines solchen Aktivgases verwendet, im engeren Wortsinn beschreibt ein Schutzgas jedoch ein Gas, welcher eine beispielsweise Oxidation in der Bearbeitungszone vollständig verhindert. Beispielsweise ist ein solches Schutzgas im engeren Wortwinn ein Inertgas wie Helium, Argon oder eine Mischung aus inerten Gasen.

In einem weiteren Aspekt wird die Aufgabe gelöst durch ein Verfahren zum mittels jeweiliger Laserstrahlen unterstützten Aufbringen eines Zusatzwerkstoffs auf einen Grundwerkstoff mittels Widerstandsauftragsschmelzen, insbesondere mittels Widerstandsaufschweißen und/oder Widerstandslöten, mit einer Vorrichtung gemäß einer oder mehrerer der vorig bezeichneten und beschriebenen Ausführungsformen, mit folgenden Schritten:
- Anlegen eines elektrischen Stromes zwischen dem Grundwerkstoff und dem Zusatzwerkstoff zum Erwärmen und/oder Aufschmelzen des Zusatzwerkstoffes,
- Einstrahlen mittels der jeweiligen Laserstrahlen in die Bearbeitungszone aus unterschiedlichen Laseremitterpositionen zum bearbeitungsabhängigen Einwirken in die Bearbeitungszone zum bearbeitungsabhängigen Unterstützen des Widerstandsauftragsschmelzens,
- Erkalten des Zusatzwerkstoffes durch ein aktives Kühlen oder passives Kühlen, sodass der Zusatzwerkstoff nach dem Erkalten mit dem Grundwerkstoff stoffschlüssig verbunden ist,
sodass der Zusatzwerkstoff auf den Grundwerkstoff unterstützt mittels der jeweiligen Laserstrahlen aufgebracht ist.

Ein solches Verfahren nutzt die Vorteile der oben beschriebenen Vorrichtung, um eine beispielsweise optimierte Schweißnaht oder auch eine optimierte Lötnaht zu erzeugen. Dabei kann beispielsweise mittels der jeweiligen Laserstrahlen ein Lenken eines Lichtbogens, eines Schmelzbades oder auch ein entsprechendes Vorbereiten oder Nachbereiten einer entsprechenden Verbindung durchgeführt werden.

Ein "aktives Kühlen" oder auch ein "passives Kühlen" kann dabei beispielsweise im Falle des aktiven Kühlens durch einen Strom eines Schutzgases oder eines weiteren Kühlmediums erfolgen, im Falle eines passiven Kühlens kann hierbei im einfachsten Falle ein Abkühlen des Zusatzwerkstoffes durch Wärmeleitung durch den Grundwerkstoff beschrieben sein.

In einer Ausführungsform ist dabei das Widerstandsauftragsschmelzen ein Auftragsschweißen, ein Verbindungsschweißen und/oder ein Verbindungslöten.

Ein "Auftragsschweißen" beschreibt dabei einen Prozess, bei dem beispielsweise ein Zusatzwerkstoff in einer Lage oder in mehreren Lagen auf einen Grundwerkstoff aufgebracht wird, um beispielsweise eine dreidimensionale Struktur zu schaffen. Eine solche dreidimensionale Struktur kann dabei ein eigenes Bauteil, beispielsweise im Falle eines 3-D-Drucks, darstellen oder auch beispielsweise als Verschleißschicht auf ein Werkzeug aufgebracht sein.

Ein "Verbindungsschweißen" beschreibt einen Widerstandsauftragsschmelzprozess, bei welchem mittels des Zusatzwerkstoffes zwei Bauteile oder auch mehrere Bauteile, beispielsweise zwei Stahlbleche, miteinander verbunden werden. Ein solches Verbindungsschweißen ist dabei beispielsweise ein Metall-Inertgas-Schweißen.

Ein "Verbindungslöten" beschreibt einen Prozess, bei welchem mittels Lötens eine stoffschlüssige Verbindung zwischen zwei Bauteilen oder mehreren Bauteilen geschaffen wird. Beispielsweise ist ein solches Verbindungslöten ein Löten von zwei Messingblechen aneinander mittels Silberlot.

In einer weiteren Ausführungsform erfolgt dabei das Einstrahlen mittels des ersten Laserstrahls, des zweiten Laserstrahls, des dritten Laserstrahls, des vierten Laserstrahls und/oder des weiteren Laserstrahls in der Bearbeitungszone auf einen gemeinsamen Punkt auf der Bearbeitungsoberfläche, insbesondere auf einen Schnittpunkt der Bezugsachse mit der Bearbeitungsoberfläche auf dem Grundwerkstoff.

Somit kann an diesem gemeinsamen Punkt, welcher beispielsweise dem oben beschriebenen Bearbeitungspunkt entspricht, ein direkter Einfluss auf die Qualität beispielsweise einer Schweißnaht oder auch einer Lötverbindung genommen werden.

Um in der Bearbeitungszone auch außerhalb eines solchen Punktes einen Einfluss auf den Prozess nehmen zu können, erfolgt das Einstrahlen mittels des ersten Laserstrahls, des zweiten Laserstrahls, des dritten Laserstrahls, des vierten Laserstrahls und/oder des weiteren Laserstrahls in der Bearbeitungszone auf die Bearbeitungsoberfläche in einer ringförmigen Anordnung oder in einer mehrfach ringförmigen Anordnung, insbesondere einer konzentrisch um einen Schnittpunkt der Bezugsachse mit der Bearbeitungsoberfläche des Grundwerkstoffs angeordneten Anordnung.

Dies kann, wie bei der erfindungsgemäßen Vorrichtung beschrieben, für ein entsprechendes Vorbereiten, Unterstützen oder auch Nachbereiten des Verfahrens genutzt werden.

In einer Ausführungsform wird oder werden ein jeweiliger Laserstrahl oder die jeweiligen Laserstrahlen für ein Vorwärmen, für ein Reinigen und/oder für ein Vorbereiten der Bearbeitungsoberfläche, für ein Aufschmelzen des Zusatzstoffs und/oder des Grundwerkstoffs und/oder für ein Nachbearbeiten des erkaltenden oder erkalteten Zusatzwerkstoffs eingesetzt.

Ein "Vorwärmen" beschreibt dabei ein Einbringen von Laserenergie mittels eines jeweiligen Laserstrahls zum Erhöhen einer Temperatur des Grundwerkstoffs oder auch des Zusatzwerkstoffs.

Ein "Reinigen" beschreibt beispielsweise ein Abbrennen von Verunreinigungen, Öl, einer Beschichtung oder anderer Stoffe von der Bearbeitungsoberfläche des Grundwerkstoffes. So kann beispielsweise ein Reinigen derart erfolgen, dass eine Zinkbeschichtung von einem Blech mittels des jeweiligen Laserstrahls oder der jeweiligen Laserstrahlen entfernt wird, bevor das eigentliche Widerstandsauftragsschmelzen erfolgt.

Ein "Vorbereiten" der Bearbeitungsoberfläche beschreibt beispielsweise ein Plasmaaktivieren oder auch ein Aufrauen der Bearbeitungsoberfläche mittels eines jeweiligen Laserstrahls.

Ein "Nachbearbeiten" des Zusatzwerkstoffs oder ein Nachbearbeiten einer auf dem Grundwerkstoff deponierten Schweißraupe kann beispielsweise dadurch erfolgen, dass mittels des jeweiligen Laserstrahls der Zusatzwerkstoff kurzfristig oder für einen definierten Zeitraum am Erkalten und/oder Erstarren gehindert wird, sodass beispielsweise der Zusatzwerkstoff in Form einer Schweißnaht oder auch einer Lötnaht verlaufen kann, sodass beispielsweise eine entsprechende Schweißnaht oder auch Lötnaht eine glattere Oberfläche erhält.

In einem weiteren Aspekt wird die Erfindung gelöst durch die Verwendung einer Vorrichtung gemäß einer der oben beschriebenen Ausführungsformen zum Widerstandsschweißen, insbesondere Widerstandsverbindungsschweißen und/oder Widerstandsauftragsschweißen.

In einem weiteren Aspekt wird die Aufgabe gelöst durch die Verwendung einer Vorrichtung gemäß einem oder mehreren der oben beschriebenen Ausführungsbeispiele zum Widerstandlöten, insbesondere Widerstandsverbindungslöten oder Widerstandsauftragslöten.

Im Weiteren wird die Erfindung anhand von Ausführungsbeispielen näher erläutert. Es zeigen
- Figur 1: eine schematische Darstellung eines Auftragsschweißens in einer Seitenansicht,
- Figur 2: eine schematische Darstellung einer Draufsicht des Auftragsschweißens der Figur 1,
- Figur 3a: einen Querschnitt einer Schweißnaht ohne Laserunterstützung,
- Figur 3b: einen Querschnitt einer Schweißnaht mit Laserunterstützung,
- Figur 4: eine schematische Darstellung eines V-Naht-Schweißens in einer Seitenansicht,

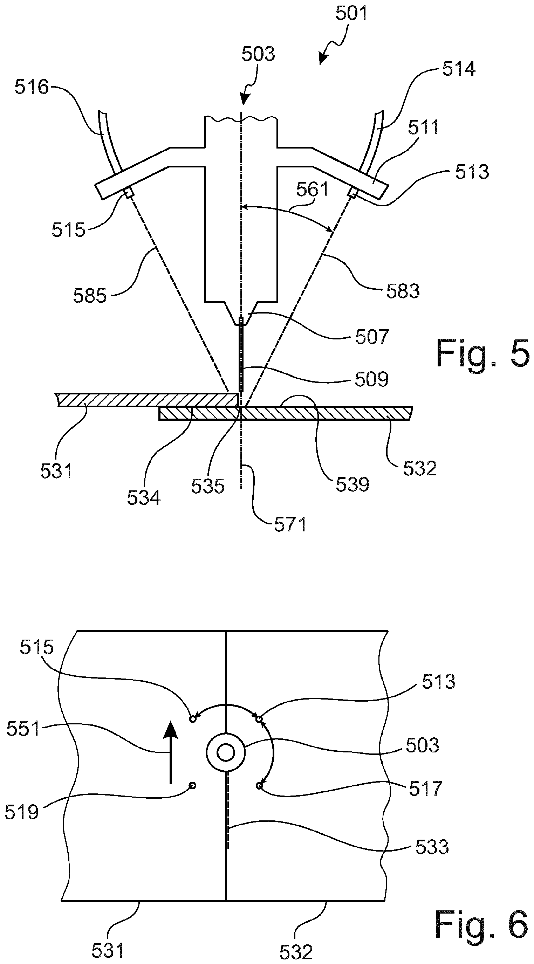

- Figur 5: eine schematische Darstellung eines Lötens in einer Seitenansicht, sowie
- Figur 6: eine schematische Darstellung des Lötens der Figur 5 in einer Draufsicht.

Ein Auftragsschweißen 101 wird mittels eines Schweißkopfes 103 auf einer Bearbeitungsoberfläche 139 eines Grundwerkstoffs 131 durchgeführt. Dabei wird mittels des Schweißkopfes 103 eine Schweißnaht 133 entlang einer Vorschubrichtung 151 erzeugt.

Der Schweißkopf 103 weist konzentrisch um eine Mittelachse 171 angeordnet eine Hülse 105 zum Zuführen eines Schutzgases, eine Drahtzuführung 107 sowie einen Grundkörper 111 auf. Die Drahtführung 107 dient der Zuführung eines Schweißdrahts 109 in eine Bearbeitungszone 135 auf dem Grundwerkstoff 131. Der Grundwerkstoff 131 ist ein Stahl, der Schweißdraht 109 aus einer kompatiblen Metalllegierung.

Ein Grundkörper 111 des Schweißkopfes 103 ist dabei mit mehreren Armen 112 ausgestattet, welche konzentrisch um die Mittelachse 171 in beispielhaften Winkeln 162, 163 und 164 zueinander versetzt angeordnet jeweilige Laseremitter tragen. Dabei sind an unterschiedlichen rotatorischen Positionen um die Mittelachse 171 ein Laseremitter 113, ein Laseremitter 115, ein Laseremitter 117, ein Laseremitter 119, ein Laseremitter 121 sowie ein Laseremitter 125 und ein Laseremitter 127 angeordnet. Die jeweiligen Laseremitter werden dabei jeweils von einem Lichtleiter, nämlich den Lichtleitern 114, 116, 118, 120, und weiteren nicht dargestellten Lichtleitern versorgt. Mittels dieser Lichtleiter wird Laserlicht von einer jeweiligen Laserquelle (nicht dargestellt) in Richtung der jeweiligen Laseremitter geleitet. Der Laseremitter 127 ist dabei im Winkel 162 zum Laseremitter 127, der Laseremitter 125 im Winkel 163 vom Laseremitter 127 und die Laseremitter 121 und 123 im Winkel 164 zueinander angeordnet, wobei die Laseremitter 113 und 115 sowie die Laseremitter 121 und 123 jeweils an unterschiedlichen Radien in Bezug zur Mittelachse 171 angeordnet sind. Die Laseremitter 121 und 123 sind dabei in einem Winkel 165 zum Verlauf der Schweißnaht 133 parallel zur Vorschubrichtung 151 angeordnet. Somit ist ein Einstrahlen mittels der jeweiligen Laseremitter aus unterschiedlichen Winkeln in die Bearbeitungszone 135 möglich.

Zwischen der Drahtzuführung 107 und dem Grundwerkstoff 131 wird mittels einer nicht dargestellten Spannungsquelle über den Schweißdraht 109 ein Stromfluss erzeugt, welcher zu einem Lichtbogen 136 zwischen dem Schweißdraht 109 und dem Grundwerkstoff 131 innerhalb der Bearbeitungszone 135 führt. Mittels des Lichtbogens 136 wird dabei der Schweißdraht 109 abgeschmolzen, sodass die Schweißnaht 133 aus einzelnen, entlang der Vorschubrichtung 151 angeordneten, Schweißpunkten (nicht dargestellt) entsteht. Dieses Prinzip entspricht dabei einem beispielsweise bekannten MIG-MAG-Schweißen.

Die unterschiedlichen Laseremitter sind dabei auf unterschiedliche Punkte in und an der Bearbeitungszone ausgerichtet, sodass ein jeweiliger Laserstrahl, beispielsweise der Laserstrahl aus dem Laseremitter 115 in einem Winkel 161, aus dem jeweiligen Laseremitter austritt und an unterschiedlichen Stellen auf dem Grundwerkstoff 131 auftrifft. Der beispielshaft genannte Winkel 161 in Bezug zur Mittelachse 171 beträgt hier in etwa 40°, wobei auch andere Winkel, beispielsweise zwischen 0° und 60° für eine Richtung des jeweiligen Laserstrahls in Bezug zur Mitelachse 171 gewählt werden können. Der Laseremitter 113 sendet dabei Laserstrahlung entlang eines Laserstrahls 183, der Laseremitter 115 entlang eines Laserstrahls 185, der Laseremitter 117 entlang eines Laserstrahls 187 sowie der Laseremitter 119 entlang eines Laserstrahls 189. Weitere Laseremitter, nämlich der Laseremitter 125 sowie der Laseremitter 127 senden analog dazu Laserstrahlen in die Bearbeitungszone. Die Leistung der jeweiligen Laserstrahlen ist regelbar, und zwar durch die regelbare Ansteuerung einer jeweiligen Laserquelle, beispielsweise einer jeweiligen Laserdiode (nicht dargestellt), welche dann über die Lichtleiter, welche dem jeweiligen Laseremitter zugeordnet sind, Laserstrahlung entsprechender Leistung an den Laseremitter sendet.

Die Laseremitter sind dabei so angeordnet, dass ein jeweiliger Winkel 162, 163 und 164 in rotatorischem Bezug zur Mittelachse 171 eingestellt ist, so dass die jeweiligen Laseremitter auch an unterschiedlichen radial angeordneten Punkten um die Mittelachse 171 auf die Bearbeitungsoberfläche 139 einstrahlen. Diese Anordnung ist beispielhaft dargestellt, eine Anordnung in beliebigen Winkeln ist hier möglich, um jeweils beispielsweise in einem Nachlauf nach oder auch Vorlauf zu einer wählbaren Bearbeitungsrichtung mittels der jeweiligen Laseremitter den Schweißprozess zu unterstützen.

Ein entsprechender Schweißvorgang sei wie folgt beschrieben:

Durch die angelegte elektrische Spannung zwischen der Drahtzuführung 107 über den Schweißdraht 109 zum Grundwerkstoff 131 zündet der Lichtbogen 136 in der Bearbeitungszone 135 und schmilzt nach und nach den nachgeführten Schweißdraht 109 ab, sodass einzelne geschmolzene Metalltropfen auf den Grundwerkstoff 131 tropfen und dann zur Schweißnaht 133 erstarren. Dabei strahlt in der Vorschubrichtung 151 vorlaufend der Laseremitter 113 den Laserstrahl 183 auf den Grundwerkstoff vor die Schweißnaht 133, sodass an dieser Stelle mittels des Laseremitters 113 und des Laserstrahls 183 ein Vorwärmen des Grundwerkstoffs 131 erfolgt, nämlich durch die eingestrahlte Laserleistung. Entsprechende Laserstrahlen aus dem Laseremitter 125 sowie dem Laseremitter 127 können dabei beispielsweise noch weiter vorlaufend vor dem Laserstrahl 183 eingesetzt werden, um beispielsweise Oberflächenverunreinigungen vom Grundwerkstoff 131 wegzubrennen und damit den Grundwerkstoff zum Vorbereiten der Schweißnaht 133 zu reinigen.

Der Laseremitter 115 mit dem Laserstrahl 185 strahlt in den Bereich der Bearbeitungszone 135 direkt in den Lichtbogen unterhalb des Schweißdrahts 109, somit kann mittels des Laserstrahls 185 der Lichtbogen stabilisiert oder auch gelenkt werden. Zudem kann mittels des Laserstrahls 185 auch die Ausformung des Lichtbogens beeinflusst werden.

Der Laserstrahl 187 aus dem Laseremitter 117 sowie der Laserstrahl 189 aus dem Laseremitter 119 werden im Nachlauf entlang der Vorschubrichtung 151 eingesetzt. Der Laserstrahl 187 strahlt dabei direkt in den an den Lichtbogen angrenzenden Bereich der Schweißnaht 133, der Laserstrahl 189 kurz dahinter, also in einigem Abstand zum Lichtbogen. Somit kann mittels des Laserstrahls 187 das Erstarrungsverhalten der Schweißnaht 133 verzögert werden, sodass das vom Schweißdraht 109 abgetropfte Material gleichmäßiger zerfließt und die Schweißnaht damit gleichmäßiger ausgebildet wird. Dies erfolgt ebenfalls durch Einbringen von zusätzlicher Wärme mittels der Energie des Laserstrahls 187. Weiterhin strahlt der Laserstrahl 189 dann auf einen bereits erstarrten, jedoch noch nicht vollständig erkalteten Bereich der Schweißnaht 133, wodurch das Abkühlverhalten der Schweißnaht 133 durch die eingestrahlte Laserenergie verzögert und damit vergleichmäßigt werden kann. Damit können mittels des Laserstrahls 189 beispielsweise Spannungen in der Schweißnaht 133 vermindert werden.

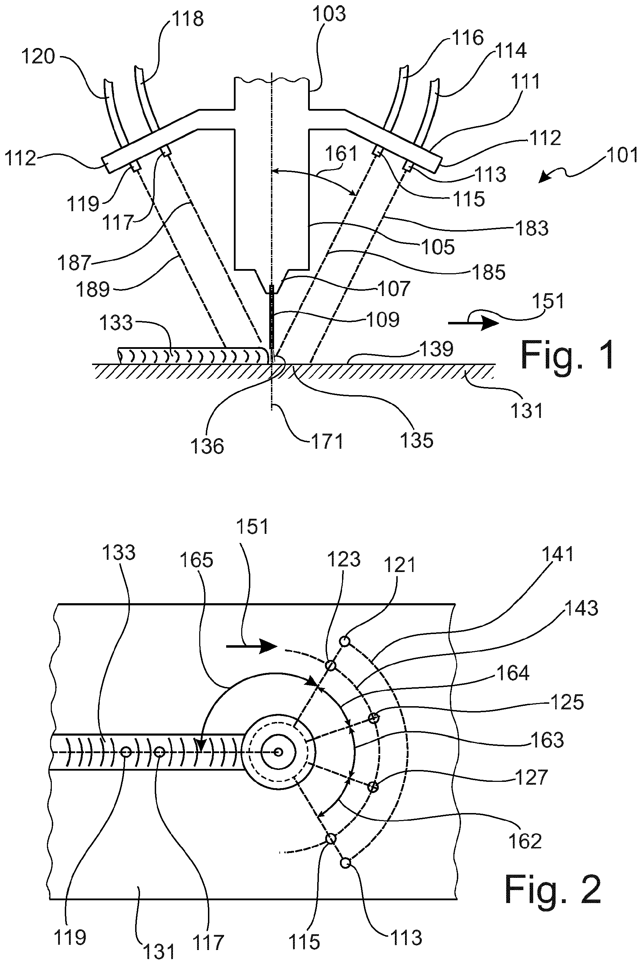

Die unterschiedlichen Laseremitter sowie auch entsprechende Auftreffpunkte der Laseremitter auf dem Grundwerkstoff 133 sind jeweils in etwa kreisförmig um die Mittelachse 171 angeordnet. Beispielhaft sind hierzu in Figur 2 die Kreisbögen 141 sowie 143 dargestellt. Die Anordnung der Laseremitter kann hier je nach gewünschtem Einstrahlwinkel in die Bearbeitungszone 135 sowie entsprechend gewählter Abstände unterschiedlich sein. Ebenso können die Auftreffpunkte der Laserstrahlen auf dem Grundwerkstoff 131 und/oder der Schweißnaht 133 kreisförmig oder in etwa kreisförmig oder auch in anderer Zusammenstellung angeordnet sein.

In einer alternativen Betriebsart können mittels beispielsweise lenkbarer Laseremitter oder einer entsprechenden Verstellung der Emitter auch einige der Laserstrahlen oder alle Laserstrahlen auf einen gemeinsamen Punkt in der Bearbeitungszone 135 fokussiert werden, sodass beispielsweise direkt ein Aufschmelzen des Schweißdrahtes 109 mittels der eingebrachten Wärmeenergie unterstützt werden kann.

Das beschriebene Vorgehen ist für ein Schweißen entlang der Vorschubrichtung 151 zweckdienlich. Werden die jeweiligen Laseremitter entsprechend in einer anderen Anordnung angesteuert und genutzt, so kann der Schweißkopf 103 richtungsunabhängig jeweilig für eine andere Vorschubrichtung genutzt werden, wobei jeweils nur die Laseremitter anders, beispielsweise mit jeweils angepasster Leistung, angesteuert werden müssen und keine mechanische Verstellung erfolgen muss.

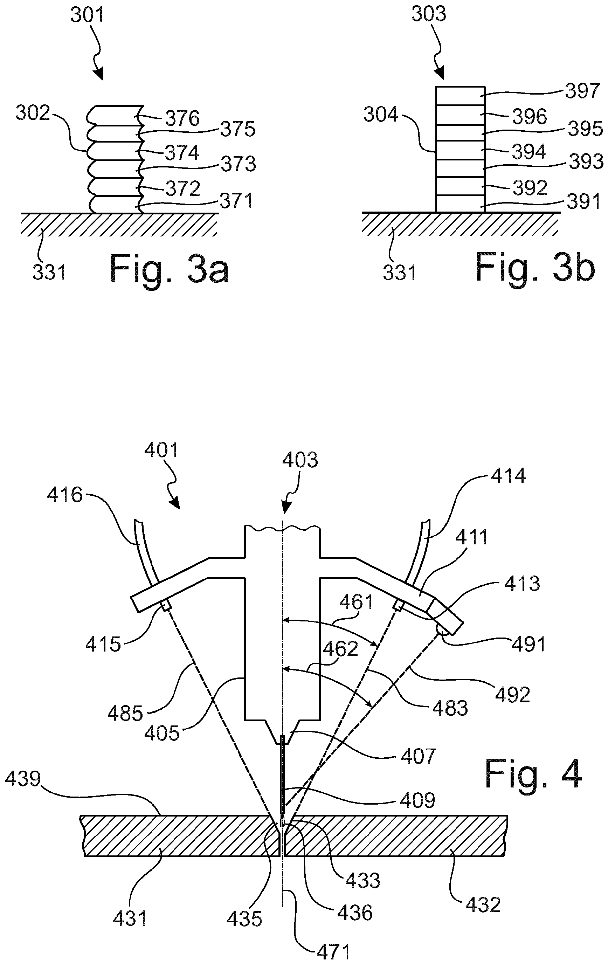

Eine Auftragsschweißnaht 301 sei hier beispielhaft für eine unvorteilhafte Einstellung der eingestrahlten Laserstrahlung beschrieben. Die Auftragsschweißnaht 301 besteht dabei aus auf einem Grundwerkstoff 331 aufgebrachten und aufeinander aufgebrachten sogenannten Lagen 371, 372, 373, 374, 375 376. Die unterschiedlichen Lagen 371, 372, 373, 374, 375, 376 sind dabei lateral gegeneinander verschoben und entsprechende Ränder 302 sind ungleichmäßig und lateral gegeneinander zu einer Welligkeit verformt. Diese Verschiebungen (vergleiche Figur 3a) entstehen, wenn vollständig ohne Laserunterstützung oder mit nur einer ungleichmäßigen und nicht zweckmäßigen Laserunterstützung geschweißt wird.

Demgegenüber ist eine Auftragsschweißnaht 303 auf dem Grundwerkstoff 331 mittels Laserunterstützung wie oben beschrieben gefertigt, sodass entsprechende Lagen 391, 392, 393, 394, 395, 396, 397 mit gleichmäßigen Rändern und gleichmäßig verlaufend derart aufgeschichtet sind, dass ein jeweiliger Rand 304 der Auftragsschweißnaht 303 mit deutlich reduzierten Verschiebungen und einer glatten Oberfläche entsteht (vergleiche Figur 3b). Die Laserunterstützung stellt dabei sicher, dass Ort und Leistung der Wärmeeinbringung zum Aufschmelzen, Vorwärmen und/oder Nachwärmen sehr genau und beispielsweise auch gleichmäßig gesteuert werden können, was den Schmelzfluss beeinflusst.

Ein analoger Schweißvorgang für ein V-Naht-Schweißen 401 wird mit einem Schweißkopf 403 durchgeführt. Der Schweißkopf 403 ist dabei analog zum Schweißkopf 103 aufgebaut, jedoch verfügt dieser über weniger Laseremitter und dazu eine zusätzliche Thermokamera 491. Eine solche Thermokamera 491 kann dabei auch bei anderen Schweißköpfen, beispielsweise dem Schweißkopf 103 oder auch Lötköpfen, eingesetzt werden.

Der Schweißkopf 403 weist eine Hülse 405 zum Zuführen von Schutzgas in eine Bearbeitungszone 435 auf. Konzentrisch um eine Mittelachse 471 ist eine Drahtzuführung 407 zum Zuführen eines Schweißdrahtes 409 in die Bearbeitungszone 435 angeordnet. Mittel der Drahtzuführung 407 kann der Schweißdraht 409 auch gefördert werden und wird daher mit gleichmäßigem Vorschub in die Bearbeitungszone 435 gefördert. Ein Stahlblech 431 sowie ein Stahlblech 432 sind zu einer V-Naht 433 vorbereitet, nämlich mit entsprechenden Abschrägungen von einer Bearbeitungsoberfläche 439 zum Vorbereiten einer solchen V-Naht 433 versehen. Die Bearbeitungszone 435 des Schweißkopfes 403 liegt dabei jeweils im Bereich der V-Naht 433. In der Darstellung der Figur 4 erfolgt dabei ein Bearbeitungsvorschub in die Bildebene hinein.

Durch eine ebenfalls zwischen der Drahtzuführung 407 und damit dem Schweißdraht 409 angelegte elektrische Spannung gegenüber dem Stahlblech 431 und dem Stahlblech 432 wird der Schweißdraht 409 mittels eines Lichtbogens 436 aufgeschmolzen und innerhalb der V-Naht 433 abgetropft, sodass eine geschlossene Schweißnaht entsteht.

An einem Grundkörper 411 des Schweißkopfes 403 sind, wie im vorig beschriebenen Beispiel des Schweißkopfes 103, unterschiedliche Laseremitter spinnenförmig angeordnet. Ein Laseremitter 413 wird mittels eines Lichtleiters 414 mit Laserstrahlung versorgt, sodass ein Laserstrahl 483 auf den Rand der V-Naht 433 am Stahlblech 342 einstrahlt. Analog dazu strahlt ein aus einem Laseremitter 415 entsandter Laserstrahl 485 auf einen Rand der V-Naht 433 auf dem Stahlblech 431. Der Laseremitter 415 wird dabei mittels eines Lichtleiters 416 versorgt. Damit ist ein Einstrahlen mittels der unterschiedlichen Laserstrahlen in einem Winkel 461 mittels des Laseremitters 413 möglich. Der Winkel 461 zur Mittelachse 471 beträgt in diesem Beispiels etwa 35° und ist analog zum Beispiel oben wie auch der Winkel 161 frei ine einem Bereich zwischen beispielsweise 0° und 90° wählbar und hier nur beispielhaft genannt.

Mittels des Laserstrahls 483 sowie des Laserstrahls 485 wird dabei eine jeweilige Seite der V-Naht 433 auf dem Stahlblech 431 und dem Stahlblech 432 vorgewärmt, sodass ein Verlaufen der Schweißnaht gleichmäßig erfolgt und eine flachere und glattere Schweißnaht entsteht.

Mittels der Thermokamera 491 kann eine Temperatur im Lichtbogen 436 entlang einer Blickrichtung 492 gemessen werden und eine Leistung der jeweiligen Laseremitter beispielsweise entsprechend der Temperatur des Lichtbogens 436 geregelt werden. Die Blickrichtung 492 ist dabei in einem Winkel 462 zur Mittelachse 471 angeordnet, sodass ein zuverlässiger Einblick in die Bearbeitungszone 435 und den Lichtbogen 436 möglich ist.

Ein Löten 501 wird mittels eines Lötkopfes 503 durchgeführt. Der Lötkopf 503 ist dabei geometrisch analog den obig beschriebene Schweißköpfen 101 sowie 401 ausgeführt. Der Lötkopf 503 weist eine Lotzuführung 507 auf, mittels welcher ein Lotstrang 509 auf eine Bearbeitungsoberfläche 539 in eine Lötzone 535 geleitet wird. Zwischen der Lotzuführung 507 und zwei miteinander zu verbindenden Messingblechen 531 und 532 kann eine elektrische Spannung angelegt werden, mittels welcher der Lotstrang 509 aufgeschmolzen wird. Mittels des Lötens 501 sollen so die beiden Messingbleche 531 und 532 verbunden werden, und zwar entlang einer überlappenden Lötnaht. Die Lötzone 535 liegt dabei im Bereich einer Mittelachse 571 des Lötkopfes 503.

Ein Laseremitter 513 und ein Laseremitter 515 sind dabei so an einem Grundkörper 511 des Lötkopfes 503 angeordnet, dass ein Einstrahlen von Laserenergie in die Lötzone 535 in einem, analog zu obigen Beispielen, beispielhaften Winkel 561 zur Mittelachse 571 ermöglicht ist. Die jeweiligen Laseremitter sind dabei analog zum obigen Beispiel in Winkeln radial um die Mittelachse 571 angeordnet. So kann mittels des Laseremitters 513 ein durch einen Lichtleiter 514 zugeführter Laserstrahl 583 in die Lötzone 535 eingestrahlt werden, mittels des Laseremitters 515 kann ein über einen Lichtleiter 516 zugeführter Laserstahl 585 in die Lötzone 535 zugeführt werden.

Das Löten erfolgt dabei parallel zur Überlappung zwischen den Messingblechen 531 und 532 entlang einer Bearbeitungsrichtung 551. Weitere Laseremitter 517 sowie 519 sind analog zu den Laseremittern 513 und 515 an unterschiedlichen Winkelpositionen um die Mittelachse 571 angeordnet, sodass insgesamt ein Einstrahlen von Laserenergie aus vier unterschiedlichen Richtungen in die Lötzone 535 ermöglicht ist.

Das Löten 501 wird wie folgt durchgeführt:

Der Lötkopf 503 wird entlang der Lötrichtung 551 parallel zur Überlappung des Messingblechs 531 mit dem Messingblech 532 geführt. Dabei wird mittels einer elektrischen Spannung zwischen der Lotzuführung 507 und damit dem Lotstrang 509 und einem oder beiden der Messingbleche 531 und 532 der Lotstrang 509 aufgeschmolzen und weiterhin das Messingblech 531 und das Messingblech 532 durch den elektrischen Stromfluss erwärmt. So aufgeschmolzenes Lot vom Lotstrang 509 läuft dann in einen Spalt 534 zwischen dem Messingblech 531 und dem Messingblech 532 und erkaltet dort, sodass mittels einer Diffusion des Lotes in das Messingblech 531 und das Messingblech 532 eine Lötverbindung entsteht. So wird die Lötnaht 533 gebildet. Mittels des Laseremitters 513 und des Laseremitters 515 wird mittels der Laserstrahlen 583 und 585 eine vorlaufende Zone vor der Lötnaht 533 vorgewärmt, sodass ein besseres Einfließen des Lotes in den Spalt 534 gewährleistet ist. Mittels der Laseremitter 517 und 519 ausgesandte Laserstrahlen werden dazu genutzt, die Lötnaht nachlaufend der Lötrichtung 551 nachzuwärmen, sodass das Lot besser verläuft und die Lötnaht sauberer ausgestaltet ist.

In einer alternativen oder zusätzlichen Ausgestaltung können dabei der Laseremitter 513, der Laseremitter 515 oder auch weitere Laseremitter aus unterschiedlichen Winkeln und in unterschiedlichen Vorlaufpositionen entlang der Lötrichtung 551 dazu genutzt werden, entsprechende Lötgrundwerkstoffe alternativ zum Messingblech 531 und zum Messingblech 532 zu reinigen. So kann beispielsweise beim Löten von verzinkten Blechen eine entsprechende Zinkbeschichtung von den Blechen entfernt, nämlich heruntergebrannt, werden.

Der Schweißkopf 103, der Schweißkopf 403 sowie der Lötkopf 503 sind an einem Industrieroboter (nicht dargestellt) angebracht und werden von diesem geführt. In Alternativen können auch mehrachsige Kinematiken, Portalanlagen oder andere Anordnungen genutzt werden, um den Schweißkopf 103, den Schweißkopf 403 und/oder den Lötkopf 503 zu führen.

### Bezugszeichenliste

- 101: Auftragsschweißen
- 103: Schweißkopf
- 105: Hülse
- 107: Drahtzuführung
- 109: Schweißdraht
- 111: Grundkörper
- 112: Arm
- 113: Laseremitter
- 114: Lichtleiter
- 115: Laseremitter
- 116: Lichtleiter
- 117: Laseremitter
- 118: Lichtleiter
- 119: Laseremitter
- 120: Lichtleiter
- 121: Laseremitter
- 123: Laseremitter
- 125: Laseremitter
- 127: Laseremitter
- 131: Grundwerkstoff
- 133: Schweißnaht
- 135: Bearbeitungszone
- 136: Lichtbogen
- 139: Bearbeitungsoberfäche
- 141: Kreisbogen
- 143: Kreisbogen
- 151: Vorschubrichtung
- 161: Winkel
- 162: Winkel
- 163: Winkel
- 165: Winkel
- 171: Mittelachse
- 183: Laserstrahl
- 185: Laserstrahl
- 187: Laserstrahl
- 189: Laserstrahl
- 301: Auftragsschweißnaht
- 302: Rand
- 303: Auftragsschweißnaht
- 304: Rand
- 331: Grundwerkstoff
- 371: Lage
- 372: Lage
- 373: Lage
- 374: Lage
- 375: Lage
- 376: Lage
- 391: Lage
- 392: Lage
- 393: Lage
- 394: Lage
- 395: Lage
- 396: Lage
- 397: Lage
- 401: V-Naht-Schweißen
- 403: Schweißkopf
- 405: Hülse
- 407: Drahtzuführung
- 409: Schweißdraht
- 411: Grundkörper
- 413: Laseremitter
- 414: Lichtleiter
- 415: Laseremitter
- 416: Lichtleiter
- 431: Stahlblech
- 432: Stahlblech
- 433: V-Naht
- 435: Bearbeitungszone
- 436: Lichtbogen
- 439: Bearbeitungsoberfläche
- 461: Winkel
- 462: Winkel
- 471: Mittelachse
- 491: Thermokamera
- 492: Blickrichtung
- 501: Löten
- 503: Lötkopf
- 507: Lotzuführung
- 509: Lotstrang
- 511: Grundkörper
- 513: Laseremitter
- 514: Lichtleiter
- 515: Laseremitter
- 516: Lichtleiter
- 517: Laseremitter
- 519: Laseremitter
- 531: Messingblech
- 532: Messingblech
- 533: Lötnaht
- 534: Spalt
- 535: Lötzone
- 539: Bearbeitungsoberfläche
- 551: Lötrichtung
- 561: Winkel
- 571: Mittelachse
- 583: Laserstrahl
- 585: Laserstrahl

## Patentansprüche

1. Vorrichtung (103, 403, 503) zum elektrischen Widerstandsauftragsschmelzen, insbesondere Widerstandsschweißen oder Widerstandslöten, eines Zusatzwerkstoffs (109, 409, 509) auf eine Bearbeitungsoberfläche (139, 439, 539) eines Grundwerkstoffs (131, 431, 432, 531, 532) in einer Bearbeitungszone (135, 435, 535) mit einer Zuführeinrichtung (107, 407, 507) zum Zuführen des Zusatzwerkstoffes (109, 409, 509) in die Bearbeitungszone (135, 435, 535) entlang einer Bezugsachse und einer elektrischen Bestromungseinheit zum Erzeugen eines elektrischen Flusses zwischen dem Grundwerkstoff (131, 431, 432, 531, 532) und dem Zusatzwerkstoff (109, 409, 509) zum Aufschmelzen des Zusatzwerkstoffes (109, 409, 509) und/oder des Grundwerkstoffes (131, 431, 432, 531, 532), **dadurch gekennzeichnet, dass** ein erster Laseremitter (113) an einer ersten Laseremitterposition, ein zweiter Laseremitter (115) an einer zweiten Laseremitterposition und ein dritter Laseremitter (117) an einer dritten Laseremitterposition derart auf die Bearbeitungszone (135, 435, 535) ausgerichtet sind, dass mittels eines ersten Laserstrahls (183) aus dem ersten Laseremitter (113), mittels eines zweiten Laserstrahls (185) aus dem zweiten Laseremitter (115) und mittels eines dritten Laserstrahls (187) aus dem dritten Laseremitter (117) ein Einstrahlen von Laserenergie aus unterschiedlichen Laseremitterpositionen ermöglicht ist, sodass mittels des ersten Laserstrahls (183) und/oder des zweiten Laserstrahls (185) ein bearbeitungsabhängiges Einwirken in die Bearbeitungszone (135, 435, 535) zum bearbeitungsabhängigen Unterstützen des Widerstandsauftragsschmelzens ermöglicht wobei der erste Laseremitter (113), der zweite Laseremitter (115) und/oder der dritte Laseremitter (117) eine Optik und/oder eine Faseroptik zum Leiten von Laserstrahlung aufweist oder aufweisen, wobei der erste Laseremitter (113), der zweite Laseremitter (115) und/oder der dritte Laseremitter (117) derart angeordnet ist oder sind, dass eine erste Laserachse des ersten Laserstrahls, eine zweite Laserachse des zweiten Laserstrahls und/oder eine dritte Laserachse des dritten Laserstrahls in einem Winkel von 0° bis 60° zur Bearbeitungsoberfläche (139, 439, 539) und in einem Winkel von 0° bis 180° zueinander angeordnet ist oder sind.

2. Vorrichtung gemäß Anspruch 1, **dadurch gekennzeichnet, dass** ein vierter Laseremitter (119) und/oder weiterer Laseremitter (121, 123, 125, 127) an einer vierten Laseremitterposition und/oder an einer weiteren Laseremitterposition derart auf die Bearbeitungszone (135, 435, 535) ausgerichtet ist oder sind, dass mittels eines vierten Laserstrahls (189)aus dem vierten Laseremitter (119) und/oder mittels eines weiteren Laserstrahls aus dem weiteren Laseremitter ein Einstrahlen von Laserenergie aus unterschiedlichen Laserpositionen ermöglicht ist.

3. Vorrichtung gemäß Anspruch 1 oder 2, **dadurch gekennzeichnet, dass** der erste Laseremitter (113), der zweite Laseremitter (115), der dritte Laseremitter (117), der vierte Laseremitter (119) und/oder der weitere Laseremitter einen Diodenlaser, einen Festkörperlaser und/oder einen Gas-Laser aufweist.

4. Vorrichtung gemäß Anspruch 3, **dadurch gekennzeichnet, dass** der erste Laseremitter (113), der zweite Laseremitter (115), der dritte Laseremitter (117), der vierte Laseremitter (119) und/oder der weitere Laseremitter derart angeordnet ist oder sind, dass eine erste Laserachse des ersten Laserstrahls, eine zweite Laserachse des zweiten Laserstrahls, eine dritte Laserachse des dritten Laserstrahls, eine vierte Laserachse des vierten Laserstrahls und/oder eine weitere Laserachse des weiteren Laserstrahls in einem Winkel von 15° bis 45°, zur Bearbeitungsoberfläche (139, 439, 539) angeordnet ist oder sind.

5. Vorrichtung gemäß einem der vorherigen Ansprüche, **dadurch gekennzeichnet, dass** der erste Laseremitter (113), der zweite Laseremitter (115), der dritte Laseremitter (117), der vierte Laseremitter (119) und/oder der weitere Laseremitter derart angeordnet ist oder sind, dass eine erste Laserachse des ersten Laserstrahls, eine zweite Laserachse des zweiten Laserstrahls, eine dritte Laserachse des dritten Laserstrahls, eine vierte Laserachse des vierten Laserstrahls und/oder eine weitere Laserachse des weiteren Laserstrahls auf die Bearbeitungsoberfläche (139, 439, 539) der Bearbeitungszone (135, 435, 535) in einem gemeinsamen Bearbeitungspunkt, in einer im Wesentlichen ringförmigen Anordnung (141) von Bearbeitungspunkten und/oder in mehreren ringförmigen Anordnungen (141, 143) von Bearbeitungspunkten auftrifft oder auftreffen.

6. Vorrichtung gemäß einem der vorherigen Ansprüche, **dadurch gekennzeichnet, dass** eine in die Bearbeitungszone (135, 435, 535) eingebrachte jeweilige Laserleistung eines jeweiligen Laseremitters einstellbar und/oder regelbar ist, wobei insbesondere jeweilige Laseremitter in unterschiedlichen Laserleistungen zueinander einstellbar sind.

7. Vorrichtung gemäß Anspruch 6, **gekennzeichnet durch** einen Sensor (491), wobei der Sensor (491) insbesondere zum Betrachten der Bearbeitungszone (135, 435, 535) angeordnet ist, sodass mittels des Sensors ein Prüfen und/oder Regeln der jeweiligen Laserleistung des jeweiligen Laseremitters erfolgt, wobei der Sensor insbesondere eine Kamera, ein Pyrometer und/oder einen Interferenzsensor aufweist.

8. Vorrichtung gemäß einem der vorherigen Ansprüche, **dadurch gekennzeichnet, dass** die Zuführeinrichtung (107, 407, 507) eine Einrichtung zum Einbringen eines Prozessgases, insbesondere eines Schutzgases, in die Bearbeitungszone (135, 435, 535) aufweist.

9. Verfahren zum mittels jeweiliger Laserstrahlen unterstützten Aufbringen eines Zusatzwerkstoffes (109, 409, 509) auf einen Grundwerkstoff (131, 431, 432, 531, 532) mittels Widerstandsauftragsschmelzen, insbesondere mittels Widerstandsschweißen und/oder Widerstandslöten, mit einer Vorrichtung gemäß einem der Ansprüche 1 bis 8, mit folgenden Schritten:
- Anlegen eines elektrischen Stromes zwischen dem Grundwerkstoff (131, 431, 432, 531, 532) und dem Zusatzwerkstoff (109, 409, 509) zum Erwärmen und/oder Aufschmelzen des Zusatzwerkstoffes,
- Einstrahlen mittels der jeweiligen Laserstrahlen in die Bearbeitungszone (135, 435, 535) aus unterschiedlichen Laseremitterpositionen zum bearbeitungsabhängigen Einwirken in die Bearbeitungszone (135, 435, 535) zum bearbeitungsabhängigen Unterstützen des Widerstandsauftragsschmelzens,
- Erkalten des Zusatzwerkstoffes (109, 409, 509) und/oder des Grundwerkstoffes (131, 431, 432, 531, 532) durch ein aktives Kühlen oder passives Kühlen, sodass der Zusatzwerkstoff (109, 409, 509) nach dem Erkalten mit dem Grundwerkstoff (131, 431, 432, 531, 532) stoffschlüssig verbunden ist,
sodass der Zusatzwerkstoff (109, 409, 509) auf den Grundwerkstoff (131, 431, 432, 531, 532) unterstützt mittels jeweiliger Laserstrahlen aufgebracht ist.

10. Verfahren gemäß Anspruch 9, **dadurch gekennzeichnet, dass** das Widerstandsauftragsschmelzen ein Auftragsschweißen, ein Verbindungsschweißen und/oder ein Verbindungslöten umfasst.

11. Verfahren gemäß Anspruch 9 oder 10, **dadurch gekennzeichnet, dass** das Einstrahlen mittels des ersten Laserstrahls (183), des zweiten Laserstrahls (185), des dritten Laserstrahls (187), des vierten Laserstrahls (189) und/oder des weiteren Laserstrahls in der Bearbeitungszone (135, 435, 535) auf einen gemeinsamen Punkt auf der Bearbeitungsoberfläche (139, 439, 539), insbesondere auf einen Schnittpunkt der Bezugsachse mit der Bearbeitungsoberfläche (139, 439, 539) auf dem Grundwerkstoff, erfolgt.

12. Verfahren gemäß einem der vorherigen Ansprüche, **dadurch gekennzeichnet, dass** das Einstrahlen mittels des ersten Laserstrahls (183), des zweiten Laserstrahls (185), des dritten Laserstrahls (187), des vierten Laserstrahls (189) und/oder des weiteren Laserstrahls in der Bearbeitungszone (135, 435, 535) auf die Bearbeitungsoberfläche (139, 439, 539) in einer ringförmigen Anordnung oder einer mehrfach ringförmigen Anordnung, insbesondere einer konzentrisch um einen Schnittpunkt der Bezugsachse mit der Bearbeitungsoberfläche (139, 439, 539) des Grundwerkstoffes angeordneten Anordnung, erfolgt.

13. Verfahren gemäß einem der vorherigen Ansprüche 9 bis 12, **dadurch gekennzeichnet, dass** ein jeweiliger Laserstrahl oder die jeweiligen Laserstrahlen für ein Vorwärmen, für ein Reinigen und/oder ein Vorbereiten der Bearbeitungsoberfläche (139, 439, 539), für ein Aufschmelzen des Zusatzwerkstoffes (109, 409, 509) und/oder des Grundwerkstoffes (131, 431, 432, 531, 532) und/oder für ein Nachbearbeiten des erkaltenden oder erkalteten Zusatzwerkstoffs (109, 409, 509) eingesetzt wird oder werden.

14. Verwendung einer Vorrichtung gemäß einem der Ansprüche 1 bis 8 zum Widerstandsschweißen, insbesondere Widerstandsverbindungsschweißen und/oder Widerstandsauftragsschweißen.

15. Verwendung einer Vorrichtung gemäß einem der Ansprüche 1 bis 8 zum Widerstandslöten, insbesondere Widerstandsverbindungslöten oder Widerstandsauftragslöten.

## Claims

1. An apparatus (103, 403, 503) for electrical resistance deposition, in particular resistance welding or resistance soldering, of a filler material (109, 409, 509) onto a machining surface (139, 439, 539) of a base material (131, 431, 432, 531, 532) in a machining zone (135, 435, 535) with a feeder device (107, 407, 507) for feeding the filler material (109, 409, 509) into the machining zone (135, 435, 535) along a reference axis and an electrical energisation unit for generating an electrical flow between the base material (131, 431, 432, 531, 532) and the filler material (109, 409, 509) to melt the filler material (109, 409, 509) and/or the base material (131, 431, 432, 531, 532),
**characterised in that**
a first laser emitter (113) at a first laser emitter position, a second laser emitter (115) at a second laser emitter position and a third laser emitter (117) at a third laser emitter position are directed towards the machining zone (135, 435, 535) in such a way that, by means of a first laser beam (183) from the first laser emitter (113), by means of a second laser beam (185) from the second laser emitter (115) and by means of a third laser beam (187) from the third laser emitter (117), an irradiation of laser energy from different laser emitter positions is made possible, such that, by means of the first laser beam (183) and/or the second laser beam (185), a machining-dependent impingement into the machining zone (135, 435, 535) for the machining-dependent support of the electrical resistance deposition process is made possible, wherein the first laser emitter (113), the second laser emitter (115) and/or the third laser emitter (117) has or have an optics system and/or a fibre optics system for guiding the laser radiation, wherein the first laser emitter (113), the second laser emitter (115) and/or the third laser emitter (117) is or are arranged in such a way that a first laser axis of the first laser beam, a second laser axis of the second laser beam and/or a third laser axis of the third laser beam is or are arranged at an angle of 0° to 60° to the machining surface (139, 439, 539) and at an angle of 0° to 180° to one another.

2. The apparatus according to claim 1, **characterised in that** a fourth laser emitter (119) and/or further laser emitter (121, 123, 125, 127) at a fourth laser emitter position and/or at a further laser emitter position is or are directed towards the machining zone (135, 435, 535) in such a way that, by means of a fourth laser beam (189) from the fourth laser emitter (119) and/or by means of a further laser beam from the further laser emitter, an irradiation of laser energy from different laser emitter positions is made possible.

3. The apparatus according to claim 1 or 2, **characterised in that** the first laser emitter (113), the second laser emitter (115), the third laser emitter (117), the fourth laser emitter (119) and/or the further laser emitter comprises a diode laser, a solid-state laser and/or a gas laser.

4. The apparatus according to claim 3, **characterised in that** the first laser emitter (113), the second laser emitter (115), the third laser emitter (117), the fourth laser emitter (119) and/or the further laser emitter is or are arranged in such a way that a first laser axis of the first laser beam, a second laser axis of the second laser beam, a third laser axis of the third laser beam, a fourth laser axis of the fourth laser beam and/or a further laser axis of the further laser beam is or are arranged at an angle of 15° to 45° to the machining surface (139, 439, 539) .

5. The apparatus according to one of the preceding claims, **characterised in that** the first laser emitter (113), the second laser emitter (115), the third laser emitter (117), the fourth laser emitter (119) and/or the further laser emitter is or are arranged in such a way that a first laser axis of the first laser beam, a second laser axis of the second laser beam, a third laser axis of the third laser beam, a fourth laser axis of the fourth laser beam and/or a further laser axis of the further laser beam strikes or strike the machining surface (139, 439, 539) of the machining zone (135, 435, 535) in a common machining point, in a substantially ring-shaped arrangement (141) of machining points and/or in a plurality of ring-shaped arrangements (141, 143) of machining points.

6. The apparatus according to one of the preceding claims, **characterised in that** a respective laser output of a respective laser emitter introduced into the machining zone (135, 435, 535) is adjustable and/or controllable, wherein respective laser emitters in different laser outputs can in particular be adjusted to one another.

7. The apparatus according to claim 6, **characterised by** a sensor (491), wherein the sensor (491) is arranged in particular to observe the machining zone (135, 435, 535), so that the respective laser output of the respective laser emitter is checked and/or controlled by the sensor, wherein the sensor comprises in particular a camera, a pyrometer and/or an interference sensor.

8. The apparatus according to one of the preceding claims, **characterised in that** the feeder device (107, 407, 507) is a device for introducing a process gas, in particular a shielding gas, into the machining zone (135, 435, 535).

9. A method for applying a feeder material (109, 409, 509) onto a base material (131, 431, 432, 531, 532) by electrical resistance deposition, in particular by resistance welding and/or resistance soldering, supported by respective laser beams, with an apparatus according to one of claims 1 to 8, comprising the following steps:
- applying an electric current between the base material (131, 431, 432, 531, 532) and the filler material (109, 409, 509) to heat and/or melt the filler material,
- irradiating with the respective laser beams into the machining zone (135, 435, 535) from different laser emitter positions for machining-dependent impingement into the machining zone (135, 435, 535) for the machining-dependent support of the electrical resistance deposition process,
- cooling the filler material (109, 409, 509) and/or the base material (131, 431, 432, 531, 532) by active cooling or passive cooling so that, after being cooled, the filler material (109, 409, 509) is integrally bonded to the base material (131, 431, 432, 531, 532),
such that the filler material (109, 409, 509) is applied to the base material (131, 431, 432, 531, 532) supported by respective laser beams.

10. The method according to claim 9, **characterised in that** the electrical resistance deposition comprises overlay welding, joint welding and/or joint soldering.

11. The method according to claim 9 or 10, **characterised in that** the irradiation with the first laser beam (183), the second laser beam (185), the third laser beam (187), the fourth laser beam (189) and/or the further laser beam takes place in the machining zone (135, 435, 535) onto a common point on the machining surface (139, 439, 539), in particular onto a point of intersection of the reference axis with the machining surface (139, 439, 539) on the base material.

12. The method according to one of the preceding claims, **characterised in that** the irradiation with the first laser beam (183), the second laser beam (185), the third laser beam (187), the fourth laser beam (189) and/or the further laser beam takes place in the machining zone (135, 435, 535) onto the machining surface (139, 439, 539) in a ring-shaped arrangement or a multi-ring-shaped arrangement, in particular an arrangement that is arranged concentrically around a point of intersection of the reference axis with the machining surface (139, 439, 539) of the base material.

13. The method according to one of the preceding claims 9 to 12, **characterised in that** a respective laser beam or the respective laser beams is or are used for preheating, for cleaning and/or preparing the machining surface (139, 439, 539), for melting the filler material (109, 409, 509) and/or the base material (131, 431, 432, 531, 532) and/or for reworking the cooling or cooled filler material (109, 409, 509).

14. Use of an apparatus according to one of claims 1 to 8 for resistance welding, in particular resistance joint welding and/or resistance overlay welding.

15. Use of an apparatus according to one of claims 1 to 8 for resistance soldering, in particular resistance joint soldering or resistance overlay soldering.

## Revendications

1. Dispositif (103, 403, 503) pour la fusion de rechargement par résistance électrique, notamment le soudage par résistance ou le brasage par résistance, d'un matériau d'apport (109, 409, 509) sur une surface d'usinage (139, 439, 539) d'un matériau de base (131, 431, 432, 531, 532) dans une zone d'usinage (135, 435, 535) avec un appareil d'amenée (107, 407, 507) pour amener le matériau d'apport (109, 409, 509) dans la zone d'usinage (135, 435, 535) le long d'un axe de référence et une unité d'alimentation électrique pour générer un flux électrique entre le matériau de base (131, 431, 432, 531, 532) et le matériau d'apport (109, 409, 509) pour faire fondre le matériau d'apport (109, 409, 509) et/ou le matériau de base (131, 431, 432, 531, 532),
**caractérisé en ce**
**qu'**un premier émetteur laser (113) à une première position d'émetteur laser, un deuxième émetteur laser (115) à une deuxième position d'émetteur laser et un troisième émetteur laser (117) à une troisième position d'émetteur laser sont orientés sur la zone d'usinage (135, 435, 535) de telle sorte qu'au moyen d'un premier faisceau laser (183) provenant du premier émetteur laser (113), au moyen d'un deuxième faisceau laser (185) provenant du deuxième émetteur laser (115) et au moyen d'un troisième faisceau laser (187) provenant du troisième émetteur laser (117) une irradiation d'énergie laser à partir de différentes positions d'émetteur laser est possible, de telle sorte qu'au moyen du premier faisceau laser (183) et/ou du deuxième faisceau laser (185), il est possible d'agir de manière dépendante de l'usinage dans la zone d'usinage (135, 435, 535) afin de soutenir de manière dépendante de l'usinage la fusion de rechargement par résistance, le premier émetteur laser (113), le deuxième émetteur laser (115) et/ou le troisième émetteur laser (117) présentant une optique et/ou une fibre optique pour guider le rayonnement laser, le premier émetteur laser (113), le deuxième émetteur laser (115) et/ou le troisième émetteur laser (117) étant agencés de telle sorte qu'un premier axe de laser du premier faisceau laser, un deuxième axe de laser du deuxième faisceau laser et/ou un troisième axe de laser du troisième faisceau laser est ou sont agencés selon un angle de 0° à 60° par rapport à la surface d'usinage (139, 439, 539) et selon un angle de 0° à 180° les uns par rapport aux autres.

2. Dispositif selon la revendication 1, **caractérisé en ce qu'**un quatrième émetteur laser (119) et/ou d'autres émetteurs laser (121, 123, 125, 127) à une quatrième position d'émetteur laser et/ou à une autre position d'émetteur laser est ou sont orientés sur la zone d'usinage (135, 435, 535) de telle sorte qu'au moyen d'un quatrième faisceau laser (189) provenant du quatrième émetteur laser (119) et/ou au moyen d'un autre faisceau laser provenant de l'autre émetteur laser une irradiation d'énergie laser à partir de différentes positions laser est possible.

3. Dispositif selon la revendication 1 ou 2, **caractérisé en ce que** le premier émetteur laser (113), le deuxième émetteur laser (115), le troisième émetteur laser (117), le quatrième émetteur laser (119) et/ou l'autre émetteur laser présente un laser à diode, un laser à solide et/ou un laser à gaz.

4. Dispositif selon la revendication 3, **caractérisé en ce que** le premier émetteur laser (113), le deuxième émetteur laser (115), le troisième émetteur laser (117), le quatrième émetteur laser (119) et/ou l'autre émetteur laser est ou sont agencés de telle sorte qu'un premier axe de laser du premier faisceau laser, un deuxième axe de laser du deuxième faisceau laser, un troisième axe de laser du troisième faisceau laser, un quatrième axe de laser du quatrième faisceau laser et/ou un autre axe de laser de l'autre faisceau laser est ou sont agencés selon un angle de 15 à 45°, par rapport à la surface d'usinage (139, 439, 539).

5. Dispositif selon l'une quelconque des revendications précédentes, **caractérisé en ce que** le premier émetteur laser (113), le deuxième émetteur laser (115), le troisième émetteur laser (117), le quatrième émetteur laser (119) et/ou l'autre émetteur laser est ou sont agencés de telle sorte qu'un premier axe de laser du premier faisceau laser, un deuxième axe de laser du deuxième faisceau laser, un troisième axe de laser du troisième faisceau laser, un quatrième axe de laser du quatrième faisceau laser et/ou un autre axe de laser de l'autre faisceau laser percute ou percutent la surface d'usinage (139, 439, 539) de la zone d'usinage (135, 435, 535) en un point d'usinage commun, selon un agencement essentiellement annulaire (141) de points d'usinage et/ou selon plusieurs agencements annulaires (141, 143) de points d'usinage.

6. Dispositif selon l'une quelconque des revendications précédentes, **caractérisé en ce qu'**une puissance laser respective d'un émetteur laser respectif introduite dans la zone d'usinage (135, 435, 535) est réglable et/ou régulable, les émetteurs laser respectifs pouvant notamment être réglés à des puissances laser différentes les uns des autres.

7. Dispositif selon la revendication 6, **caractérisé par** un capteur (491), le capteur (491) étant notamment agencé pour observer la zone d'usinage (135, 435, 535), de telle sorte qu'un contrôle et/ou une régulation de la puissance laser respective de l'émetteur laser respectif s'effectue au moyen du capteur, le capteur présentant notamment une caméra, un pyromètre et/ou un capteur d'interférence.

8. Dispositif selon l'une quelconque des revendications précédentes, **caractérisé en ce que** l'appareil d'amenée (107, 407, 507) présente un appareil pour introduire un gaz de processus, notamment un gaz de protection, dans la zone d'usinage (135, 435, 535).

9. Procédé d'application soutenue au moyen de faisceaux laser respectifs d'un matériau d'apport (109, 409, 509) sur un matériau de base (131, 431, 432, 531, 532) au moyen d'une fusion de rechargement par résistance, notamment au moyen d'un soudage par résistance et/ou d'un brasage par résistance, avec un dispositif selon l'une quelconque des revendications 1 à 8, avec les étapes suivantes :
- l'application d'un courant électrique entre le matériau de base (131, 431, 432, 531, 532) et le matériau d'apport (109, 409, 509) pour réchauffer et/ou faire fondre le matériau d'apport,
- l'irradiation au moyen des faisceaux laser respectifs dans la zone d'usinage (135, 435, 535) à partir de différentes positions d'émetteur laser pour agir de manière dépendante de l'usinage dans la zone d'usinage (135, 435, 535) pour soutenir de manière dépendante de l'usinage la fusion de rechargement par résistance,
- le refroidissement du matériau d'apport (109, 409, 509) et/ou du matériau de base (131, 431, 432, 531, 532) par un refroidissement actif ou un refroidissement passif, de telle sorte que le matériau d'apport (109, 409, 509) est lié par liaison de matière au matériau de base (131, 431, 432, 531, 532) après le refroidissement,
de telle sorte que le matériau d'apport (109, 409, 509) est appliqué sur le matériau de base (131, 431, 432, 531, 532) de manière soutenue au moyen de faisceaux laser respectifs.

10. Procédé selon la revendication 9, **caractérisé en ce que** la fusion de rechargement par résistance comprend un soudage de rechargement, un soudage de liaison et/ou un brasage de liaison.

11. Procédé selon la revendication 9 ou 10, **caractérisé en ce que** l'irradiation est effectuée au moyen du premier faisceau laser (183), du deuxième faisceau laser (185), du troisième faisceau laser (187), du quatrième faisceau laser (189) et/ou de l'autre faisceau laser dans la zone d'usinage (135, 435, 535) sur un point commun sur la surface d'usinage (139, 439, 539), notamment sur un point d'intersection de l'axe de référence avec la surface d'usinage (139, 439, 539) sur le matériau de base.

12. Procédé selon l'une quelconque des revendications précédentes, **caractérisé en ce que** l'irradiation est effectuée au moyen du premier faisceau laser (183), du deuxième laser (185), du troisième faisceau laser (187), du quatrième faisceau laser (189), et/ou de l'autre faisceau laser dans la zone d'usinage (135, 435, 535) sur la surface d'usinage (139, 439, 539) selon un agencement annulaire ou un agencement annulaire multiple, notamment selon un agencement agencé de manière concentrique autour d'un point d'intersection de l'axe de référence avec la surface d'usinage (139, 439, 539) du matériau de base.

13. Procédé selon l'une quelconque des revendications 9 à 12 précédentes, **caractérisé en ce qu'**un faisceau laser respectif ou les faisceaux laser respectifs est ou sont utilisés pour un préchauffage, pour un nettoyage et/ou une préparation de la surface d'usinage (139, 439, 539), pour une fusion du matériau d'apport (109, 409, 509) et/ou du matériau de base (131, 431, 432, 531, 532) et/ou pour une rectification du matériau d'apport (109, 409, 509) refroidissant ou refroidi.

14. Utilisation d'un dispositif selon l'une quelconque des revendications 1 à 8 pour le soudage par résistance, notamment le soudage de liaison par résistance et/ou le soudage de rechargement par résistance.

15. Utilisation d'un dispositif selon l'une quelconque des revendications 1 à 8 pour le brasage par résistance, notamment le brasage de liaison par résistance ou le brasage de rechargement par résistance.
